# FASCICULE DE BREVET EUROPEEN

(11) **EP 4 293 271 B1**
(45) Date de publication et mention de la délivrance du brevet: **19.02.2025**
(21) Numéro de dépôt: 23173272.8
(22) Date de dépôt: 15.05.2023
(51) Int. Cl.: F17C 1/14, F17C 3/08

(54) **RÉSERVOIR CRYOGÉNIQUE**
KRYOGENER TANK
CRYOGENIC TANK

(30) Priorité: 17.06.2022 FR 2205958
(43) Date de publication de la demande: 20.12.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BOYE, Guillaume, 38360 SASSENAGE (FR); JEUNESSE, Loïc, 38360 SASSENAGE (FR); CORDEAU, Florent, 38360 SASSENAGE (FR)
(74) Mandataire: Air Liquide

(56) Documents cités:
- EP-A1- 0 487 374
- EP-A1- 3 875 832
- FR-A- 861 544
- US-A- 3 713 560
- US-A1- 2018 224 064

## Description

L'invention concerne un réservoir cryogénique.

L'invention concerne plus particulièrement un réservoir cryogénique notamment pour le transport de fluide cryogénique, par exemple l'hydrogène ou d'hélium liquéfié, comprenant une enveloppe interne en matériau métallique ou alliage et destinée à contenir le fluide cryogénique, une enveloppe externe en matériau métallique ou alliage et disposée autour de l'enveloppe interne et délimitant un espacement entre les deux enveloppes, ledit espacement étant sous-vide, l'enveloppe externe s'étendant selon une direction longitudinale et comprenant une pluralité de nervures de renfort réparties dans des plans perpendiculaires à la direction longitudinale, les nervures étant formées par des déformations, par exemple par moletage, d'une même paroi de l'enveloppe externe dont un exemple est divulgué dans le document US 2018/224064.

Les réservoirs cryogéniques utilisent classiquement une structure à double enveloppe isolée sous vide pour assurer l'autonomie de stockage lors du transport de liquide cryogénique.

Ces enveloppes métalliques ou en alliage sont réalisées par chaudronnerie et soumises donc à des codes de construction de chaudronnerie (ex. ASME VIII). Ces enveloppes doivent résister sous une pression extérieure du fait de leur tirage au vide et ne doivent pas impacter la masse du réservoir (ou conteneur qui l'abrite).

Les réservoirs sous vide sont principalement dimensionnés pour la tenue en pression extérieure. Cette tenue mécanique est assurée par une épaisseur de virole (tôle soudée formant l'enveloppe cylindrique) adaptée et/ou des éléments de raidissement.

Dans le cas des réservoirs transportables en matériau métallique, l'optimisation de la masse est un enjeu important, la solution d'épaissir la paroi de l'enveloppe ne permet pas d'atteindre une masse de réservoir adaptée. Une solution serait d'utiliser des matériaux métalliques de type alliage d'aluminium mais le faible module d'Young de ce matériau oblige à augmenter l'épaisseur.

Une solution connue consiste donc à ajouter des raidissement (nervures) sur la paroi : soit par ajout d'anneaux : soit soudés soit par formés par déformation de la virole afin de raidir celle-ci (moletage par exemple).

Le renforcement par anneaux soudés peut poser des problèmes d'encombrement et ces anneaux doivent faire tout le tour de la virole pour garantir leur efficacité. Ces anneaux sont généralement plus épais que la virole et ajoutent de la masse à l'équipement.

Le renforcement par nervures formées par déformation de la tôle (procédé de moletage) ne rajoute aucune masse au réservoir mais amène des problématiques de raideur axiale faible de l'enveloppe (effet « accordéon ») Cet effet est d'autant plus marqué sur les enveloppes en aluminium.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que le réservoir comprend en outre au moins un élément de renfort d'au moins une partie d'au moins une des nervures, l'élément de renfort comprenant une bande reliée rigidement au niveau des deux portions de la paroi situées à la base et de part et d'autre de la nervure.

Par ailleurs, des modes de réalisation de l'invention peuvent comporter l'une ou plusieurs des caractéristiques suivantes :
- la bande est en matériau métallique ou alliage est soudée à l'enveloppe externe,
- les nervures s'étendent sur tout ou partie de la circonférence de l'enveloppe externe, au moins une partie des nervures étant munie d'au moins une bande,
- au moins une partie des nervures est munie de plusieurs bandes discrètes réparties sur une partie de la circonférence de l'enveloppe, par exemple trois bandes,
- les bandes s'étendent dans un plan perpendiculaire à la direction longitudinale sur 40 à 80 et de préférence 50 à 70% de la circonférence de l'enveloppe externe,
- la ou les bandes ont une largeur mesurée dans une direction parallèle à la direction longitudinale comprise entre une fois et trois fois la largeur de la nervure,
- la première enveloppe et la deuxième enveloppe ont une forme générale cylindrique de section circulaire et s'étendant selon la direction longitudinale et une section circulaire, l'axe longitudinal étant orienté horizontalement en configuration de transport ou d'utilisation du réservoir,
- les nervures font saillie sur la surface extérieure de l'enveloppe externe.

L'invention peut concerner également tout dispositif alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

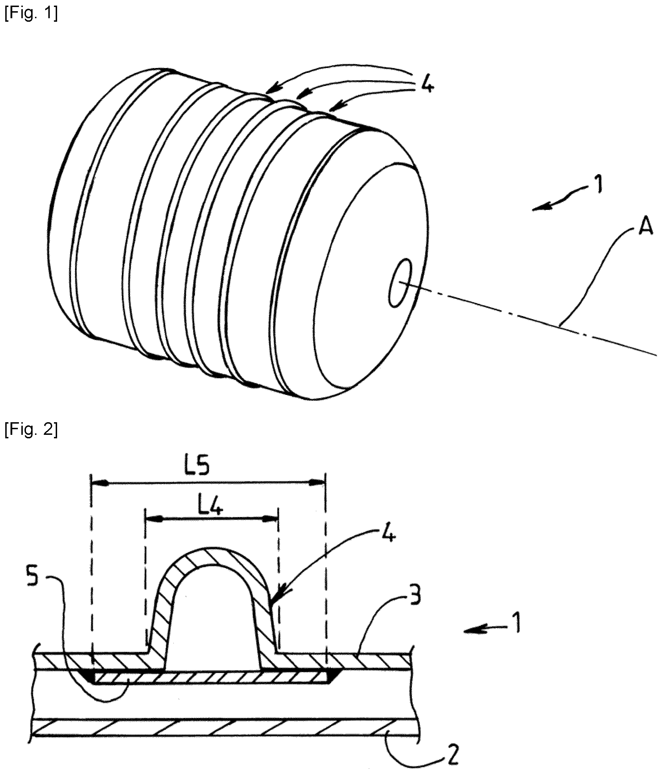

[Fig. 1] est une vue en perspective, schématique et partielle d'un exemple de réservoir selon l'invention,
[Fig. 2] est une vue en coupe longitudinale, schématique et partielle, d'un détail du réservoir,

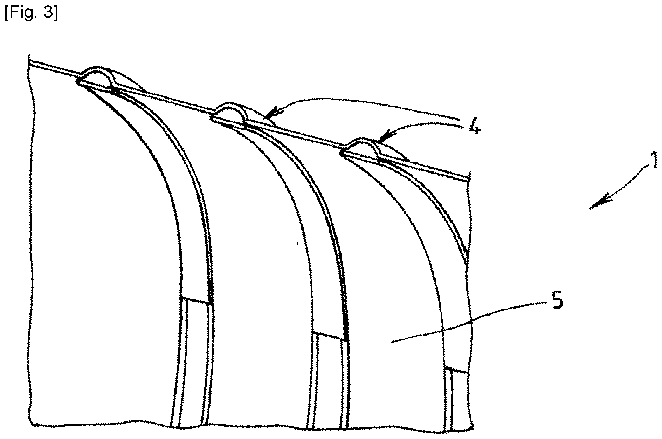

[Fig. 3] est une vue en perspective et en coupe, schématique et partielle, d'un détail du réservoir.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le réservoir 1 illustré est un réservoir cryogénique par exemple pour le stockage et le transport de fluide cryogénique, par exemple de l'hydrogène ou de l'hélium liquéfié.

Ce réservoir 1 comprend une enveloppe 2 interne en matériau métallique ou alliage et destinée à contenir le fluide cryogénique. Le réservoir 1 comprend également une enveloppe 3 externe en matériau métallique ou alliage disposée autour de l'enveloppe 2 interne et délimitant un espacement entre les deux enveloppes 2, 3. Cet espacement est sous-vide et contient de préférence un isolant thermique, par exemple du type multicouches (« MLI »).

Le réservoir 1 et notamment l'enveloppe 3 externe s'étend selon une direction longitudinale A.

Comme illustré, la première enveloppe 2 et la deuxième enveloppe 3 ont de préférence une forme générale cylindrique à section circulaire qui s'étend selon la direction A longitudinale. C'est-à-dire que chaque enveloppe possède une portion cylindrique centrale formée par une tôle ou virole dont les extrémités sont refermées par des dômes respectifs.

De préférence, l'axe A longitudinal est orienté horizontalement en configuration de transport ou d'utilisation du réservoir 1. L'enveloppe 3 externe comprend une pluralités de nervures de renfort 4 réparties dans des plans perpendiculaires à la direction A longitudinale. Les nervures 4 sont formées par des déformations, par exemple par moletage, d'une même paroi de l'enveloppe 3 externe (portion cylindrique centrale).

Comme illustré, ces nervures 4 font de préférence saillie sur la surface extérieure de l'enveloppe 3 externe. De préférence, les nervures 4 sont formées sur toute la circonférence de l'enveloppe 3 externe. Par exemple, les nervures 4 sont formées sur la parois cylindrique de façon espacées selon la direction A longitudinale d'une distance comprise entre 50 et 200mm par exemple de l'ordre de 100mm.

De préférence, les nervures 4 sont réparties de façon régulière selon la direction A longitudinale sur la portion cylindrique (virole) par exemple selon la formule suivante : d = L/(n+2) Avec : d = distance entre deux nervures adjacentes, L = longueur de virole, n = nombre de nervures. La distance d peut varier en fonction des autres éléments d'assemblage (comme par exemple la position de pieds sur le réservoir) mais de préférence la distance d est constante entre chaque nervure pour répartir la raideur de la virole.

Ainsi, la virole (portion cylindrique d'une pièce) comprend plusieurs nervures 4 obtenues par déformation mécanique.

De plus, au moins une et de préférence toutes les nervures 4 comprennent au moins un élément 5 de renfort. L'élément 5 de renfort comprend une bande 5, par exemple métallique ou en alliage, reliée (fixée) rigidement au niveau des deux portions de la paroi qui sont situées à la base et de part et d'autre de la nervure 4.

La bande 5 est de préférence soudée à l'enveloppe 3 externe de part et d'autre de la nervure 4.

Les nervures 4 s'étendent dans des plans perpendiculaires à la direction A longitudinale sur tout ou partie de la circonférence de l'enveloppe 3 externe.

Par exemple, une ou plusieurs ou toutes les nervures 4 sont munies de plusieurs bandes 5 discrètes réparties sur la circonférence de l'enveloppe 3, par exemple trois bandes 5. Les bandes sont de préférence réparties uniformément sur le pourtour du réservoir 1.

Par exemple, les bandes 5 s'étendent dans un plan perpendiculaire à la direction A longitudinale sur au moins la moitié de la circonférence de l'enveloppe 3 externe (et sont soudée/fixées) donc sur au moins la moitié de la circonférence de l'enveloppe 3.

De préférence, la ou les bandes 5 ont une largeur L5 mesurée dans une direction parallèle à la direction A longitudinale comprise entre une fois et trois fois la largeur L4 de la nervure 4.

La solution proposée permet d'améliorer la raideur axiale du réservoir 1 en limitant ou empêchant l'effet accordéon. Ces bandes 5 peuvent être fixées sur la face interne de l'enveloppe externe 3.

Ces bande 5 augmentent la rigidité axiale du réservoir 1 et, de plus, font office d'éléments de transmissions d'efforts. Les bandes 5 sont composées de préférence du même matériau que l'enveloppe 3 à rigidifier. Elles permettent de maintenir la tenue au vide du réservoir 1. Dans le cas d'efforts transitant dans le supportage, les bandes sont de préférence positionnées au droit des supports (tirants/cols...).

Comme décrit ci-dessus ces bandes 5 peuvent être fixées uniquement à certains endroits de l'enveloppe 3 externe (il n'est en effet pas nécessaire de prévoir ce renfort 5 sur tout le pourtour de chaque nervure 4). Ceci limite l'impact sur la masse totale du réservoir 1.

## Revendications

1. Réservoir cryogénique notamment pour le transport de fluide cryogénique, par exemple l'hydrogène ou d'hélium liquéfié, comprenant une enveloppe (2) interne en matériau métallique ou alliage et destinée à contenir le fluide cryogénique, une enveloppe (3) externe en matériau métallique ou alliage et disposée autour de l'enveloppe (2) interne et délimitant un espacement entre les deux enveloppes (2, 3), ledit espacement étant sous-vide, l'enveloppe (3) externe s'étendant selon une direction longitudinale (A) et comprenant une pluralité de nervures de renfort (4) réparties dans des plans perpendiculaires à la direction (A) longitudinale, les nervures (4) étant formées par des déformations, par exemple par moletage, d'une même paroi de l'enveloppe (3) externe, **caractérisé en ce que** le réservoir (1) comprend en outre au moins un élément (5) de renfort d'au moins une partie d'au moins une des nervures (4), l'élément (5) de renfort comprenant une bande (5) reliée rigidement au niveau des deux portions de la paroi situées à la base et de part et d'autre de la nervure (4).

2. Réservoir selon la revendication 1, **caractérisé en ce que** la bande (5) est en matériau métallique ou alliage est soudée à l'enveloppe (3) externe.

3. Réservoir selon la revendication 1 ou 2, **caractérisé en ce que** les nervures (4) s'étendent sur tout ou partie de la circonférence de l'enveloppe (3) externe et **en ce que** ce qu'au moins une partie des nervures (4) est munie d'au moins une bande (5).

4. Réservoir selon l'une quelconque des revendications 1 à 3, **caractérisé en ce qu'**au moins une partie des nervures (4) est munie de plusieurs bandes (5) discrètes réparties sur une partie de la circonférence de l'enveloppe (3), par exemple trois bandes (5).

5. Réservoir selon la revendication 4, **caractérisé en ce que** lesdites bandes (5) s'étendent dans un plan perpendiculaire à la direction (A) longitudinale sur 40 à 80 et de préférence 50 à 70% de la circonférence de l'enveloppe (3) externe.

6. Réservoir selon l'une quelconque des revendications 1 à 5, **caractérisé en ce que** la ou les bandes (5) ont une largeur (L5) mesurée dans une direction parallèle à la direction (A) longitudinale comprise entre une fois et trois fois la largeur (L4) de la nervure (4).

7. Réservoir selon l'une quelconque des revendications 1 à 6, **caractérisé en ce que** la première enveloppe (2) et la deuxième enveloppe (3) ont une forme générale cylindrique de section circulaire et s'étendant selon la direction (A) longitudinale et une section circulaire, l'axe (A) longitudinal étant orienté horizontalement en configuration de transport ou d'utilisation du réservoir (1).

8. Réservoir selon l'une quelconque des revendications 1 à 7, **caractérisé en ce que** les nervures (4) font saillie sur la surface extérieure de l'enveloppe (3) externe.

## Patentansprüche

1. Kryogener Tank insbesondere für den Transport von kryogenem Fluid, z. B. Wasserstoff oder verflüssigtem Helium, mit einer inneren Hülle (2) aus einem metallischen Material oder einer Legierung, die zur Aufnahme des kryogenen Fluids bestimmt ist, einer äußeren Hülle (3) aus einem metallischen Material oder einer Legierung, die um die innere Hülle (2) herum angeordnet ist und einen Zwischenraum zwischen den beiden Hüllen (2, 3) begrenzt, wobei der Zwischenraum unter Vakuum steht, die äußere Hülle (3) sich in einer Längsrichtung (A) erstreckt und eine Vielzahl von Verstärkungsrippen (4) aufweist, die in Ebenen senkrecht zur Längsrichtung (A) verteilt sind, wobei die Rippen (4) durch Verformungen, beispielsweise durch Rändeln, einer gleichen Wand der äußeren Hülle (3) gebildet werden, **dadurch gekennzeichnet, dass** der Tank (1) darüber hinaus mindestens ein Element (5) zur Verstärkung mindestens eines Teils mindestens einer der Rippen (4) aufweist, wobei das Verstärkungselement (5) einen Streifen (5) aufweist, der an den beiden Abschnitten der Wand, die sich an der Basis und auf beiden Seiten der Rippe (4) befinden, starr verbunden ist.

2. Tank nach Anspruch 1, **dadurch gekennzeichnet, dass** der Streifen (5) aus einem metallischen Werkstoff oder einer Legierung besteht und mit der äußeren Hülle (3) verschweißt ist.

3. Tank nach Anspruch 1 oder 2, **dadurch gekennzeichnet, dass** sich die Rippen (4) über den gesamten Umfang oder einen Teil des Umfangs der äußeren Hülle (3) erstrecken und dass zumindest ein Teil der Rippen (4) mit mindestens einem Streifen (5) versehen ist.

4. Tank nach einem der Ansprüche 1 bis 3, **dadurch gekennzeichnet, dass** mindestens ein Teil der Rippen (4) mit mehreren diskreten Streifen (5) versehen ist, die über einen Teil des Umfangs der Hülle (3) verteilt sind, z. B. drei Streifen (5).

5. Tank nach Anspruch 4, **dadurch gekennzeichnet, dass** sich die Streifen (5) in einer Ebene senkrecht zur Längsrichtung (A) über 40 bis 80 und vorzugsweise 50 bis 70 % des Umfangs der äußeren Hülle (3) erstrecken.

6. Tank nach einem der Ansprüche 1 bis 5, **dadurch gekennzeichnet, dass** der oder die Streifen (5) eine Breite (L5), gemessen in einer Richtung parallel zur Längsrichtung (A), aufweisen, die zwischen dem Ein- und Dreifachen der Breite (L4) der Rippe (4) liegt.

7. Tank nach einem der Ansprüche 1 bis 6, **dadurch gekennzeichnet, dass** die erste Hülle (2) und die zweite Hülle (3) eine allgemein zylindrische Form mit kreisförmigem Querschnitt haben und sich in der Längsrichtung (A) erstrecken und einen kreisförmigen Querschnitt haben, wobei die Längsachse (A) in der Transport- oder Gebrauchskonfiguration des Tanks (1) horizontal ausgerichtet ist.

8. Tank nach einem der Ansprüche 1 bis 7, **dadurch gekennzeichnet, dass** die Rippen (4) über die Außenfläche der äußeren Hülle (3) vorstehen.

## Claims

1. Cryogenic tank, in particular for transporting cryogenic fluid, for example liquefied helium or hydrogen, comprising an inner shell (2) made of a metal material or alloy and intended to contain the cryogenic fluid, an outer shell (3) made of a metal material or alloy, arranged around the inner shell (2) and delimiting a space between the two shells (2, 3), said space being under vacuum, the outer shell (3) extending in a longitudinal direction (A) and comprising a plurality of reinforcing ribs (4) distributed in planes that are perpendicular to the longitudinal direction (A), the ribs (4) being formed by deformations, for example by knurling, on one and the same wall of the outer shell (3), **characterized in that** the tank (1) also comprises at least one reinforcing element (5) for reinforcing at least part of at least one of the ribs (4), the reinforcing element (5) comprising a strip (5) rigidly connected to the two portions of the wall situated at the base and on either side of the rib (4).

2. Tank according to Claim 1, **characterized in that** the strip (5) is made of a metal material or alloy and is welded to the outer shell (3).

3. Tank according to Claim 1 or 2, **characterized in that** the ribs (4) extend over all or part of the circumference of the outer shell (3) and **in that** at least part of the ribs (4) is provided with at least one strip (5).

4. Tank according to any one of Claims 1 to 3, **characterized in that** at least part of the ribs (4) is provided with a plurality of discrete strips (5) distributed over part of the circumference of the shell (3), for example three strips (5).

5. Tank according to Claim 4, **characterized in that** said strips (5) extend in a plane that is perpendicular to the longitudinal direction (A) over 40 to 80%, and preferably 50 to 70%, of the circumference of the outer shell (3).

6. Tank according to any one of Claims 1 to 5, **characterized in that** the one or more strips (5) have a width (L5), measured in a direction that is parallel to the longitudinal direction (A), of between one and three times the width (L4) of the rib (4).

7. Tank according to any one of Claims 1 to 6, **characterized in that** the first shell (2) and the second shell (3) have a cylindrical general shape with a circular cross section and extending in the longitudinal direction (A) and a circular cross section, the longitudinal axis (A) being oriented horizontally when the tank (1) is in the transport or use configuration.

8. Tank according to any one of Claims 1 to 7, **characterized in that** the ribs (4) protrude from the exterior surface of the outer shell (3).
